# EUROPÄISCHE PATENTSCHRIFT

(11) **EP 2 029 305 B1**
(45) Veröffentlichungstag und Bekanntmachung des Hinweises auf die Patenterteilung: **09.03.2011**
(21) Anmeldenummer: 07729516.0
(22) Anmeldetag: 25.05.2007
(51) Int. Cl.: B23D 77/02, B23D 77/08, B23C 5/22

(54) **MASCHINENWERKZEUG SOWIE SCHNEIDRING FÜR EIN MASCHINENWERKZEUG**
CUTTING TOOL AND CUTTING RING FOR A CUTTING TOOL
OUTIL D'USINAGE ET ANNEAU DE COUPE POUR UN OUTIL D'USINAGE

(30) Priorität: 20.06.2006 DE 102006028729
(43) Veröffentlichungstag der Anmeldung: 04.03.2009
(73) Patentinhaber: Komet Group GmbH, 74354 Besigheim (DE)
(72) Erfinder: KRUSZYNSKI, Jacek, 70190 Stuttgart (DE); KRETZSCHMANN, Uwe, 74354 Besigheim (DE); HODZA, Erkan, 71679 Asperg (DE)
(74) Vertreter: Wolf, Eckhard
(86) Internationale Anmeldenummer: PCT/EP2007/055087
(87) Internationale Veröffentlichungsnummer: WO 2007/147699

(56) Entgegenhaltungen:
- WO-A-03/013769
- WO-A-2004/078395
- CH-A- 546 614
- CH-A5- 613 644
- DE-A1- 4 202 751
- US-A1- 2004 018 065
- US-B1- 6 234 724

## Beschreibung

Die Erfindung betrifft ein Maschinenwerkzeug nach dem Oberbegriff des Anspruchs 1 für ein Maschinenwerkzeug nach dem Oberbegriff des Anspruchs 11. Ein derartiger Maschinen werkzeug und ein derartiger Schneidring sind aus dem Dokument WO 2004/078395 A1 bekannt. Maschinenwerkzeuge mit Schneidringen sind vorwiegend für Reibarbeiten für die Feinbearbeitung bestimmt. Bei bekannten Maschinenwerkzeugen dieser Art sind die als Schneidplatten ausgebildeten Einsatzplatten in ihren Plattensitzen angelötet. Zum Ausrichten der Schneidringe wird dabei wie folgt vorgegangen: Zunächst werden die Schneidplatten aufgelötet. Im Anschluss daran wird der Schneidring mit seinen Schneidplatten auf ein bestimmtes Nennmaß beschliffen. Grundsätzlich können die Schneidplatten dann auch noch beschichtet werden. Beim Schleifvorgang erhalten die als Schneidkanten ausgebildeten Arbeitskanten der Schneidplatten ihre individuelle Schneidenform. Bei einem Beabeitungsvorgang tritt ein Plattenverschleiß im Bereich der Schneiden auf, der von Zeit zu Zeit eine Maßkorrektur erforderlich macht. Dazu wird der Schneidring über einen zentralen Dehnmechanismus elastisch aufgedehnt. Sobald die Aufdehnung den elastischen Bereich überschreitet, müssen zusätzliche Korrekturen durchgeführt werden. Dazu gehört ein plastisches Aufdehnen des Schneidrings auf Übermaß sowie ein anschließendes Zurechtschleifen auf Bearbeitungsmaß und gegebenenfalls eine nochmalige Beschichtung der Schneidplatten. Dieser Vorgang wird üblicherweise nicht beim Anwender, sondern im Werk durchgeführt. Ein solcher Vorgang kann 5 bis 10 mal wiederholt werden, bis die Schneidplatten verbraucht sind. Schließlich werden die Schneidplatten vom Schneidring abgelötet und durch neue ersetzt. Dort werden die vorstehenden Vorgänge wiederholt. Auch dieser Vorgang ist nur begrenzt, beispielsweise bis zu 10 mal wiederholbar. Ein Nachteil dieser Vorgehensweise besteht darin, dass das Ab- und Auflöten von Schneidplatten aufwändig ist und dass die Materialeigenschaften durch die Temperaturerhöhung beim Löten negativ beeinflusst werden. Die Vorgänge des plastischen Aufweitens und des Auf- und Ablötens der Schneidplatten sowie das anschließende Nachschleifen auf Nennmaß kann nur in der Fabrik durchgeführt werden, was ebenfalls als nachteilig empfunden wird.

Ausgehend hiervon liegt der Erfindung die Aufgabe zugrunde, ein Maschinenwerkzeug der eingangs angegebenen Art dahingehend zu verbessern, dass sowohl die Herstellung als auch der Plattenwechsel erleichtert wird und dass Teile dieser Vorgänge zum Anwender hin verlagert werden.

Zur Lösung dieser Aufgabe werden die in den Ansprüchen 1 und 11 angegebenen Merkmalskombinationen vorgeschlagen. Vorteilhafte Ausgestaltungen und Weiterbildungen der Erfindung ergeben sich aus den abhängigen Ansprüchen.

Die erfindungsgemäße Lösung besteht im Wesentlichen darin, dass die Wendeplatten einer Gruppe und die Plattensitze hinsichtlich ihrer gegenseitigen Zuordnung über einstimmend gekennzeichet sind, dass die arbeitshanten der Wendeplatten einer Gruppe hinsichtlich ihrer gegenseitigen Zuordnung übereinstimmend gekennzeichnet sind, dass alle Wendeplatter der Gruppe übereinstimmende Wechselpositionen einnehmen, in welcher definierte Arbeitskanten einer jeden Wendeplatte der Gruppe innerhalb des zugehörigen Plattensitzes gleich orientiert sind, und dass die Arbeitskanten der Wendeplatten der Gruppe in allen gemeinsamen Wechselpositionen auf Nennmaß beschliffen sind.

Die Wendeplatten einer Gruppe können dabei als Schneidplatten oder als Stützplatten ausgebildet sein, wobei die Arbeitskanten im Falle der Schneidplatten als Schneidkanten und im Falle der Stützplatten als Stützkanten ausgebildet sind.

Mit den vorstehenden Maßnahmen wird erreicht, dass der Wendeplattenwechsel im Falle eines Arbeitskantenverschleisses mit einfachen Handgriffen vom Anwender selbst durchgeführt werden kann. Dabei ist nur zu berücksichtigen, dass jeder Wendeplatte ein "Heimplattensitz" zugeordnet ist, und dass die Arbeitskanten innerhalb der Wendeplatten in gleicher Weise durchnummeriert sind. Beim Wendeplattenwechsel müssen alle Wendeplatten in ihrem zugehörigen Plattensitz hinsichtlich der Orientierung ihrer Arbeitskanten jeweils die gleiche Position einnehmen. Dies bedeutet, dass alle wirksamen Arbeitskanten der Wendeplatten einer Gruppe jeweils die gleiche Kennzeichnung oder Nummer tragen müssen.

Grundsätzlich ist es möglich, an einem Schneidkörper auch mehrere Gruppen von Wendeplatten mit unterschiedlichen axialen und/oder radialen Ausrichtungen ihrer Arbeitskanten in zugehörigen Plattensitzen zu verwenden. Dementsprechend wird gemäß einer bevorzugten Ausgestaltung der Erfindung vorgeschlagen, dass der Schneidkörper Plattensitze für mindestens eine weitere Gruppe von Wendeplatten aufweist, deren Arbeitskanten in ihrer wirksamen Wechselposition auf ein Nennmaß beschliffen sind. In diesem Fall sind die einander gruppenweise zugeordneten Wendeplatten getrennt auf ihr Nennmaß überschliffen. Die Umsetzung der Wendeplatten kann innerhalb verschiedener Gruppen gemeinsam oder getrennt erfolgen.

Eine vorteilhafte Ausgestaltung der Erfindung sieht vor, dass die Arbeitskanten der Wendeplatten einer Gruppe in allen gemeinsamen Wechselpositionen oberflächenbeschichtet sind.

Gemäß einer bevorzugten Ausgestaltung der Erfindung ist der Schneidkörper als Schneidring mit über seinen Umfang verteilt angeordneten Plattensitze ausgebildet.

Vorteilhafterweise weisen die Wendeplatten die Gestalt eines Prismas auf, an dessen über eine Grundfläche vorzugsweise senkrecht überstehenden Seitenrändern die Arbeitskanten ausgeformt sind. Eine erste Ausführungsvariante sieht hierbei vor, dass die Wendeplatten die Gestalt eines Prismas mit gleichschenklig dreieckiger Grundfläche aufweisen. Eine weitere Erfindungsvariante sieht vor, dass die Wendeplatten die Gestalt eines Prismas mit viereckiger, beispielsweise rechteckiger oder quadratischer Grundfläche aufweisen. Im letzteren Falle sind die einander benachbarten Arbeitskanten der Wendeplatten paarweise spiegelbildlich zueinander orientiert.

Eine bevorzugte Ausgestaltung der Erfindung sieht vor, dass die Wendeplatten mit mindestens einer, vorzugsweise als Senkkopfschraube ausgebildeten Kopfschraube am Schneidkörper bzw. Schneidring fixiert sind. Bei einer ersten Ausführungsvariante können die Kopfschrauben in radial ausgerichteten Gewindebohrungen des Schneidkörpers eingedreht sein. Bei einer zweiten Ausführungsvariante sind die Kopfschrauben in in Umfangsrichtung ausgerichtete Gewindebohrungen des Schneidkörpers eingedreht, während im Falle einer dritten Ausführungsvariante die Kopfschrauben in achsparallel ausgerichtete Gewindebohrungen des Schneidkörpers eingedreht sind.

Eine zusätzliche Nachstellmöglichkeit im Falle eines Arbeitskantenverschleißes wird dadurch ermöglicht, dass der als Schneidring ausgebildete Schneidkörper einen zentralen Innenkonus zum Ansetzen eines konischen Spreizwerkzeugs aufweist. Der Schneidring weist dabei zweckmäßig sich zu einem Innenkonus ergänzende, den einzelnen Plattensitzen zugeordnete Stützelemente auf, zwischen denen in Umfangsrichtung verlaufende, einzelnen Spannuten zugeordnete, elastisch aufspreizbare Wandabschnitte kleinerer Wandstärke angeordnet sind. Außerdem ist ein den Schneidring gegen einen Werkzeughalter verspannender, mit einem Außenkonus gegen die Stützelemente anliegender Spreizkörper vorgesehen. Die Verspannung erfolgt dabei zweckmäßig mit Hilfe einer Spannmutter, die auf einen zentralen, werkzeughalterfesten Gewindezapfen aufdrehbar ist und dabei den Spreizkörper gegen den Schneidring spannt.

Die Erfindung betrifft außerdem einen Schneidring mit Wendeplatten, der die erfindungsgemäßen Eigenschaften aufweist und dazu bestimmt ist, an einem Maschinenwerkzeug für Werkzeugmaschinen lösbar befestigt zu werden.

Im Folgenden wird die Erfindung anhand eines in der Zeichnung in schematischer Weise dargestellten Ausführungsbeispiels näher erläutert. Es zeigen
- Fig. 1: einen Schneidring mit im Grundriss dreieckigen Wendeplatten in schaubildlicher Darstellung;
- Fig. 2: einen Schneidring mit im Grundriss rechteckigen, in Umfangsrich- tung montierten Wendeplatten in schaubildlicher Darstellung;
- Fig. 3: einen Schneidring mit im Grundriss viereckigen, radial montierten Wendeplatten in schaubildlicher Darstellung;
- Fig. 4: ein Maschinenwerkzeug mit einem Schneidring entsprechend Fig. 3;
- Fig. 5: einen Schneidring entsprechend Fig. 3 mit konischem Spann- schaft;
- Fig. 6: ein gegenüber Fig. 5 abgewandeltes Ausführungsbeispiel mit zwei Gruppen von Wendeplatten;
- Fig. 7a: und b einen Schneidring mit Aufspreizrosette und gleichartigen rechteckigen Wendeplatten in schaubildlicher Darstellung und in Draufsicht;
- Fig. 8: einen Schneidring mit Aufspreizrosette, einer Gruppe Schneid- platten und einer Gruppe Stützplatten in schaubildlicher Darstel- lung;
- Fig. 9: eine Seitenansicht eines Maschinenwerkzeugs mit Schneidring und Spreizvorrichtung;
- Fig. 10: den Schneidring mit Aufspreizrosette des Maschinenwerkzeugs nach Fig. 9;
- Fig. 11: einen Schneidring entsprechend Fig. 5 mit einer Schneidplatte und einer Gruppe Stützplatten in schaubildlicher Darstellung.

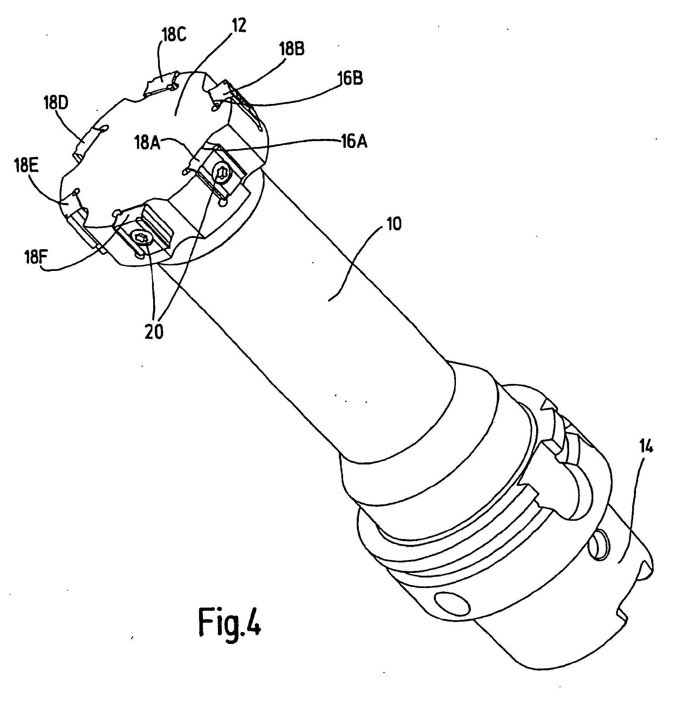

In Fig. 4 ist beispielhaft ein als Reibwerkzeug ausgebildetes Maschinenwerkzeug gezeigt, das im vorderen Teil eines Werkzeughalters 10 einen lösbar befestigten Schneidring 12 trägt und an seinem rückwärtigen Ende mit einem Kupplungselement 14 für den Anschluss an eine Maschinenspindel versehen ist.

Der Schneidring 12 weist bei dem in Fig. 4 gezeigten Ausführungsbeispiel 6 in Umfangsrichtung einen Abstand voneinander angeordnete Plattensitze 16 A-F auf, die mit jeweils einer als Schneidplatte ausgebildeten Wendeplatte 18 A-F bestückt sind. Die Wendeplatten 18 A-F sind mittels radial ausgerichteter Senkkopfschrauben an den Plattensitzen 16 A-F des Schneidrings 12 fixiert. Die Wendeplatten 18 A-F sind dabei abwechselnd axial und radial gegeneinander versetzt angeordnet und bilden daher eine erste Gruppe aus den Wendeplatten 18 A,C,E und eine zweite Gruppe aus den Wendeplatten B,D,F. Die Wendeplatten haben die Gestalt eines geraden Prismas mit im Wesentlichen rechteckiger Grundfläche, an deren senkrecht über die Grundfläche überstehenden Randkanten die als Schneidkanten ausgebildeten Arbeitskanten 1,2,3,4 eingeformt sind. Durch Lösen der Senkkopfschrauben 20 kann jede einzelne Wendeplatte 18 A-F innerhalb der Plattensitze 16 A-F gewendet und/oder gedreht und dabei umgesetzt werden.

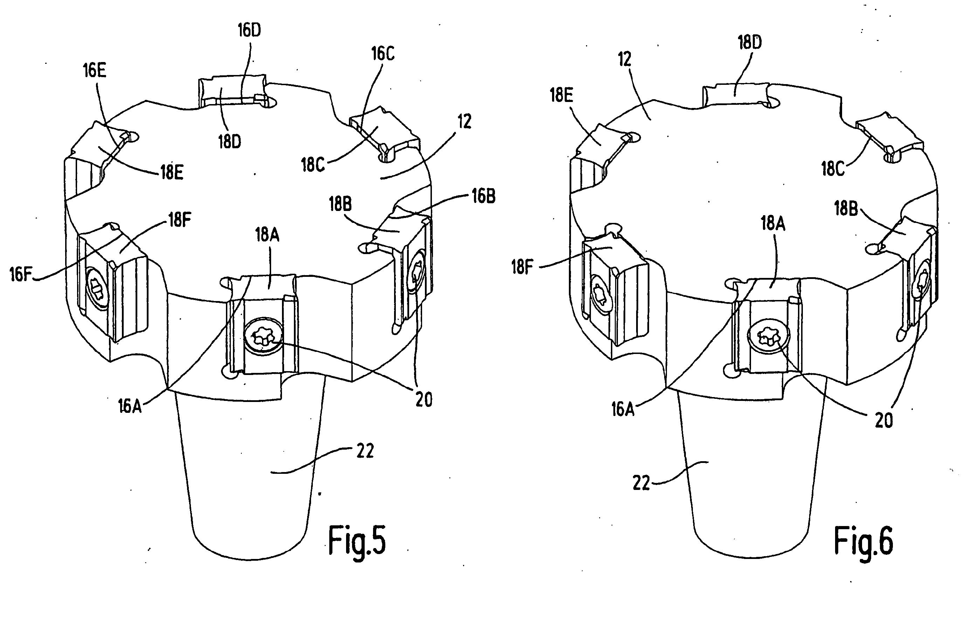

Bei den in Fig. 5 und 6 gezeigten Werkzeugen ist ebenfalls ein Schneidring 12 vorgesehen, der einen kegelförmigen Werkzeugschaft trägt. Auch dort sind in Plattensitzen 16 A-F als Schneidplatten ausgebildete Wendeplatten 18 A-F mittels radial ausgerichteter Senkkopfschrauben 20 im Schneidring 12 befestigt. Bei dem in Fig. 6 gezeigten Ausführungsbeispiel sind wie im Falle der Fig. 4 zwei Gruppen Wendeplatten 18 A,C,E bzw. 18 B,D,F angeordnet, die abwechselnd axial und radial leicht gegeneinander versetzt angeordnet sind. Im Falle der Fig. 5 befinden sich alle Wendeplatten 18 A-F auf gleicher Höhe am Schneidring 12 und bilden daher nur eine Gruppe gleichartiger Wendeplatten.

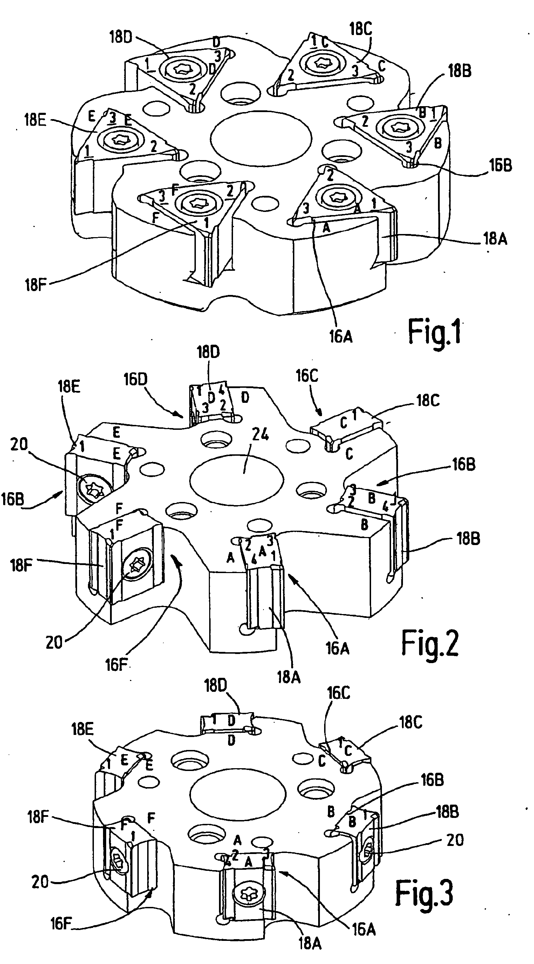

Die Schneidringe 12 werden unabhängig von ihren Werkzeugschäften 10,22 hergestellt, fertig bearbeitet und mit den Wendeplatten bestückt. Bei den Ausführungsbeispielen nach Fig. 1 bis 3 sind die Schneidringe 12 in ihrem vom Werkzeugschaft 10,22 abgetrennten Zustand dargestellt. Der Schneidring gemäß Fig. 3 entspricht dabei in seinem Aufbau dem Schneidring nach Fig. 5.

Bei dem Ausführungsbeispiel nach Fig. 1 haben die Wendeplatten 18 A-F die Gestalt eines geraden Prismas mit dreieckiger Grundfläche, in dessen zur Grundfläche senkrechten Randkanten die als Schneidkanten ausgebildeten Arbeitskanten 1,2,3 eingeformt sind. Die Plattensitze 16 A-F sind der dreieckigen Umrissform der Wendeplatten 18 angepasst. Die Wendeplatten nach Fig. 1 sind mittels axial ausgerichteter Senkkopfschrauben im Schneidring fixiert.

Bei dem Ausführungsbeispiel nach Fig. 2 weisen die Wendeplatten 18 A-F ebenso wie im Falle der Fig. 3 die Gestalt eines geraden Prismas mit rechteckiger Grundfläche auf, wobei die vier als Schneidkanten ausgebildeten Arbeitskanten 1,2,3,4 in die über die Grundfläche senkrecht überstehenden Randkanten des Prismas eingeformt sind. Die Plattensitze 16 A-F sind im Schneidring 12 nach Fig. 2 mit ihrem Boden in Umfangsrichtung ausgerichtet. Dementsprechend sind die Wendeplatten 18 A-F dort mittels in Umfangsrichtung ausgerichteter Senkkopfschrauben 20 in ihren Plattensitzen 16 A-F am Schneidring 12 fixiert.

Bei den Schneidringen 12 nach den Fig. 1 bis 3 bilden die Wendeplatten 18 A-F eine Gruppe und sie sind in ihren Plattensitzen 16 A-F in radialer und axialer Richtung gleich positioniert.

Die Herstellung und Konfektionierung der Schneidringe nach Fig. 1 bis 3 erfolgt in der folgenden Reihenfolge:

Zunächst wird der Grundkörper des Schneidrings 12 fertig bearbeitet. In einer Weichbearbeitung erhält er die erforderliche Kontur mit den Plattensitzen und den Gewindebohrungen für die Senkkopfschrauben 20. Dann wird er einer Wärmebehandlung unterzogen, in deren Anschluss die Aufnahmebohrung 24 geschliffen wird. Die einzelnen Plattensitze 16 A-F werden mit den Adressen A-F beschriftet.

Sodann werden die Wendeplatten bereitgestellt, die für die eindeutige Zuordnung zu einzelnen Plattensitzen 16 A-F mit den Buchstaben A-F gekennzeichnet werden. Außerdem werden die einzelnen Arbeitskanten mit Nummern 1 bis 4 beschriftet, so dass eine Schneidenzuordnung bei den verschiedenen Wendeplatten möglich ist.

Das Beschleifen der Wendeplatten erfolgt gruppenweise dadurch, dass die zu einer Gruppe gehörenden Wendeplatten 18 A-F in die zugehörigen Plattensitze 16 A-F so eingesetzt werden, dass zunächst jeweils die Arbeitskante 1 aller Einsatzplatten gemeinsam auf Nennmaß beschliffen wird. Anschließend werden die Wendeplatten 18 A-F innerhalb der zugehörigen Plattensitze 16 A-F so umgesetzt, dass nunmehr die Arbeitskante 2 in die wirksame Position gelangt. In dieser Stellung werden die Arbeitskanten 2 aller Wendeplatten auf Nennmaß beschliffen. Dieser Vorgang wird fortgesetzt, bis die letzten Arbeitskanten der Wendeplatten einer Gruppe auf Nennmaß beschliffen sind. Sofern mehrere Gruppen von Wendeplatten vorhanden sind, wie dies bei den Ausführungsbeispielen nach Fig. 4 und 6 der Fall ist, wird der Schleifvorgang für die Wendeplatten der anderen Gruppen in derselben Reihenfolge wiederholt.

Der Schneidring oder das Werkzeug wird dann in montiertem Zustand an den Kunden geliefert. Im Falle eines Verschleißes der Arbeitskanten kann der Kunde die Wendeplatten in den zugehörigen Plattensitzen unter Beibehaltung der Zuordnungen A,B,C,... und 1,2,3,... selbst in den Plattensitzen umsetzen.

Wenn alle Arbeitskanten abgenutzt oder verschlissen sind, sendet der Anwender den Grundkörper des Schneidrings 12 zum Hersteller, der dann einen weiteren Satz Wendeplatten einmessen kann. Die hierfür notwendige Zeit kann der Kunde durch einen weiteren bestückten Schneidring überbrücken.

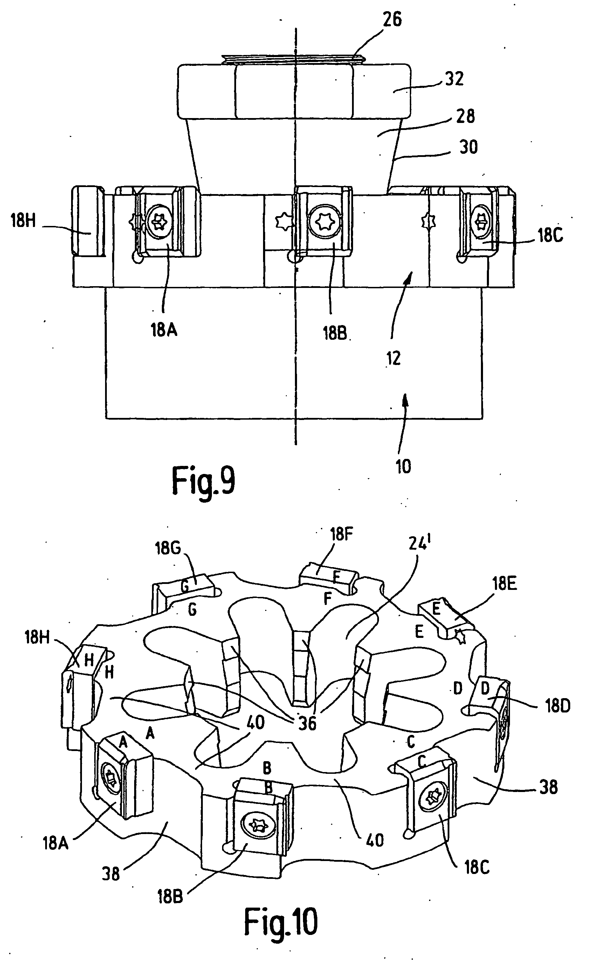

Das in Fig. 9 gezeigte Ausführungsbeispiel eines Maschinenwerkzeugs eröffnet eine weitere Verstellmöglichkeit im Verschleißfalle. Der Werkzeughalter 10 trägt dort einen stirnseitig zentral überstehenden Gewindezapfen 26, auf den ein Spreizkörper 28 mit einem Außenkonus 30 unter Zwischenspannen des Schneidrings 12 mit Hilfe einer Gewindemutter 32 aufspannbar ist. Wie aus Fig. 10 sowie Fig. 7a,b und 8 zu ersehen ist, weist der Schneidring 12 in diesem Fall eine rosettenartig ausgebildete Ausnehmung 24' auf, die nach innen hin durch mehrere, sich zu einem Innenkonus ergänzende, den einzelnen Plattensitzen 16 A-H zugeordnete Stützelemente 36 begrenzt ist, zwischen denen in Umfangsrichtung verlaufende, den einzelnen Spannuten 38 zugeordnete, elastisch aufspreizbare Wandabschnitte 40 kleinerer Wandstärke angeordnet sind. Im montierten Zustand liegt der Spreizkörper 28 mit seinem Außenkonus 30 gegen die Stützelemente 36 des Schneidrings 12 an. Der Schneidring kann unter elastischer Aufspreizung im Bereich der Wandabschnitte 40 elastisch aufgedehnt werden. Da die elastische Aufspreizung reversibel ist, besteht eine eindeutige Zuordnung zwischen dem Umdrehungswinkel der Gewindemutter 32 und der damit erzielten radialen Aufweitung.

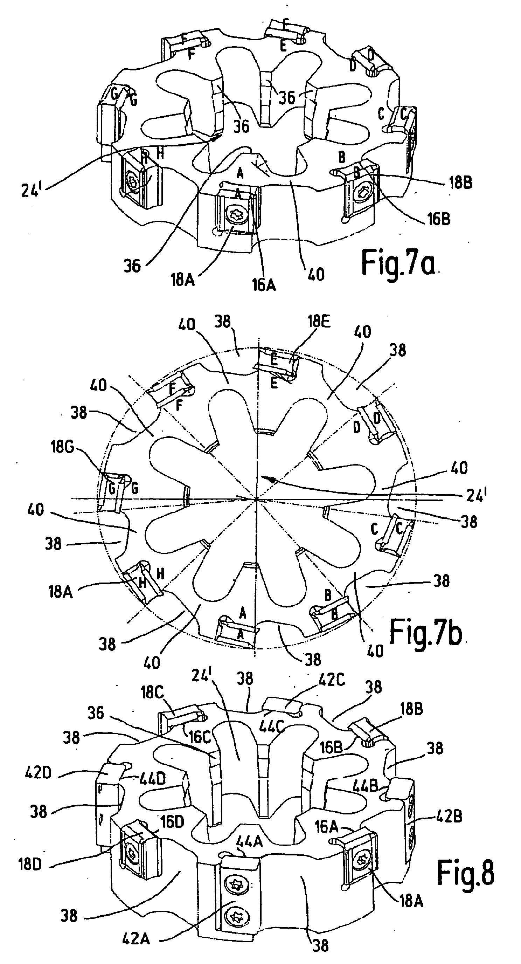

Bei dem Ausführungsbeispiel nach Fig. 7a und b weist der Schneidring eine Gruppe von acht über den Umfang verteilten Plattensitzen 16 A-H und Wendeplatten 18 A-H mit radial ausgerichteten Senkkopfschrauben 20 auf.

Das Ausführungsbeispiel nach Fig. 8 zeigt eine Gruppe von vier gleichartigen als Schneidplatten ausgebildete Wendeplatten 18 A bis D sowie eine weitere Gruppe von vier gleichartigen als Stützplatten ausgebildete Wendeplatten 42 A-D auf, die in Plattensitzen 16 A-D und 44 A-D angeordnet sind und deren Schneid- und Stützkanten im Werk gruppenweise getrennt voneinander auf Nennmaß beschliffen werden.

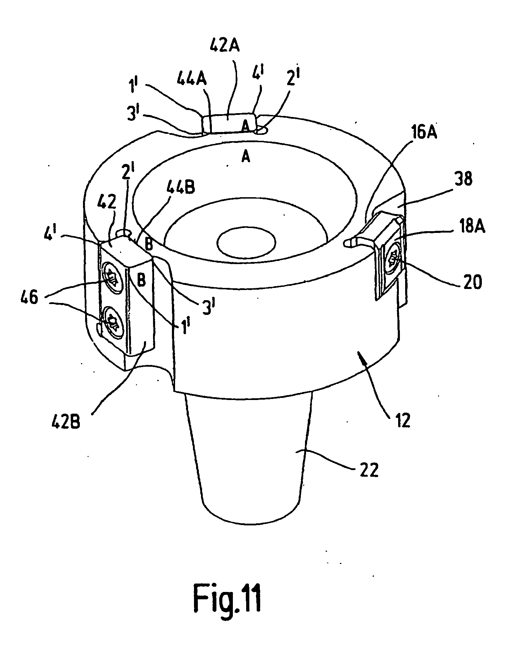

Bei dem in Fig. 11 gezeigten Ausführungsbeispiel weist der Schneidring 12 insgesamt drei Plattensitze auf, von denen der Plattensitz 16A mit einer als Schneidplatte ausgebildeten Wendeplatte 18A und die Sitze 44A und B mit zwei zu einer Gruppe gehörenden, als Stützplatten ausgebildeten Wendeplatten 42A,42B bestückt sind. Die Wendeplatte 16A hat vier als Schneidkanten ausgebildete Arbeitskanten, während die Wendeplatten 42A und B vier als Stützkanten ausgebildete Arbeitskanten 1',2',3',4' aufweist. Die Wendeplatte 16 ist mit einer zentralen, radial ausgerichteten Senkkopfschraube 20 am Schneidring fixiert, während die Wendeplatten 42A und B mit zwei Senkkopfschrauben 46 am Schneidring befestigt sind. Die als Stützplatten ausgebildeten Wendeplatten 42A,B werden bei der Montage an ihren vier Arbeitskanten 1',2',3',4' jeweils gemeinsam bei abgenommener Wendeplatte 16A auf Nennmaß überschliffen, während die als Schneidplatte ausgebildete Wendeplatte 16A bei abgenommenen Wendeplatten 42A und B an ihren vier als Schneidkanten ausgebildeten Arbeitskanten auf Nennmaß überschliffen werden. Bei einem Verschleiß der Arbeitskanten der verschiedenen Wendeplatten werden die als Stützplatten ausgebildeten Wendeplatten 42A und B gruppenweise gemeinsam in ihren Plattensitzen umgesetzt, während die Wendeplatte 16A unabhängig davon umgesetzt werden kann.

Die Fig. 8 und 11 verdeutlichen, dass sowohl Schneidplatten als auch Stützplatten, die jeweils als Wendeplatten ausgebildet sind, Plattengruppen im

Sinne der Erfindung bilden und gruppenweise in ihren Heimatplattensitzen eingeschliffen bzw. umgesetzt werden können.

## Patentansprüche

1. Maschinenwerkzeug für den Gebrauch in Werkzeugmaschinen mit einem vorzugsweise als Schneidring ausgebildeten Schneidkörper (12), mit mindestens zwei im Schneidkörper in Umfangsrichtung einen Abstand voneinander aufweisenden Plattensitzen (16,44), mit mindestens einer Gruppe von mindestens einer in den Plattensitzen lösbar angeordneten Einsatzplatte (18,42), die mindestens eine Arbeitskante (1 bis 4) aufweist, wobei die mindestens eine Arbeitskante der mindestens einen Einsatzplatte einer Gruppe auf ein vorgegebenes Nennmaß beschliffen ist, wobei die Einsatzplatten als Wendeplatten (18,42) ausgebildet sind, wobei jede einzelne Wendeplatte einer Gruppe in allen Wechselpositionen einem definierten Plattensitz (16,44) zugeordnet ist, und wobei die Wendeplatten einer Gruppe jeweils mindestens zwei Arbeitskanten (1 bis 4,1' bis 4') aufweisen, von denen je nach Lage der Wendeplatten in den zugehörigen Plattensitzen (16,44) immer eine sich in einer wirksamen und mindestens eine andere in einer unwirksamen Position befinden, **dadurch gekennzeichnet, dass** die Wendeplatten (18,42) einer Gruppe und die Plattensitze (16,44) hinsichtlich ihrer gegenseitigen Zuordnung übereinstimmend **gekennzeichnet** sind, dass die Arbeitskanten (1 bis 4, 1' bis 4') der Wendeplatten (18,42) einer Gruppe hinsichtlich ihrer gegenseitigen Zuordnung übereinstimmend **gekennzeichnet** sind, dass alle Wendeplatten einer mehrere Wendeplatten aufweisenden Gruppe miteinander übereinstimmende Wechselpositionen einnehmen, in welchen definierte Arbeitskanten (1 bis 4,1' bis 4') einer jeden Wendeplatte (18,42) der jeweiligen Gruppe innerhalb des zugehörigen Plattensitzes (16,44) gleich orientiert sind, und dass die Arbeitskanten (1 bis 4,1' bis 4') der Wendeplatten einer Gruppe in allen gemeinsamen Wechselpositionen auf Nennmaß beschliffen sind.

2. Maschinenwerkzeug nach Anspruch 1, **dadurch gekennzeichnet, dass** die Wendeplatten (18) einer Gruppe als Schneidplatten und deren Arbeitskanten (1 bis 4) als Schneidkanten ausgebildet sind.

3. Maschinenwerkzeug nach Anspruch 1 oder 2, **dadurch gekennzeichnet, dass** die Wendeplatten (42) einer Gruppe als Stützplatten und die Arbeitskanten (1' bis 4') als Stützkanten ausgebildet sind.

4. Maschinenwerkzeug nach einem der Ansprüche 1 bis 3, **dadurch gekennzeichnet, dass** der Schneidkörper als Schneidring (12) mit über seinen Umfang verteilt angeordneten Plattensitzen (16,44) ausgebildet ist

5. Maschinenwerkzeug nach einem der Ansprüche 1 bis 4, **dadurch gekennzeichnet, dass** die Wendeplatten (18,42) im Wesentlichen die Gestalt eines geraden Prismas aufweisen, an dessen zu einer Grundfläche senkrechten Seitenkanten die Arbeitskanten (1 bis 4, 1' bis 4') eingeformt sind.

6. Maschinenwerkzeug nach Anspruch 5, **dadurch gekennzeichnet, dass** die Wendeplatten (18,42) die Gestalt eines Prismas mit rechteckiger oder quadratischer Grundfläche aufweisen und dass die einander benachbarten Arbeitskanten der Wendeplatten (18) paarweise spiegelbildlich zueinander orientiert sind.

7. Maschinenwerkzeug nach einem der Ansprüche 1 bis 6, **dadurch gekennzeichnet, dass** der als Schneidring (12) ausgebildete Schneidkörper eine zentrale, vorzugsweise konisch ausgebildete Spreizvorrichtung zum Aufspreizen des Schneidrings aufweist.

8. Maschinenwerkzeug nach Anspruch 7, **dadurch gekennzeichnet, dass** der Schneidring (12) sich zu einem Innenkonus ergänzende, den einzelnen Plattensitzen (16,44) zugeordnete Stützelemente (36) aufweist, zwischen denen in Umfangsrichtung verlaufende, einzelnen Spannuten (38) zugeordnete elastisch aufspreizbare Wandabschnitte (40) kleinerer Wandstärke angeordnet sind, und dass ein den Schneidring (12) gegen einen Werkzeughalter (10) verspannender, mit einem Außenkonus (30) gegen die Stützelemente (36) anliegender Spreizkörper (28) vorgesehen ist.

9. Maschinenwerkzeug nach Anspruch 8, **gekennzeichnet durch** eine auf einen zentralen werkzeughalterfesten Gewindezapfen (26) aufdrehbare, den Spreizkörper (28) gegen den Schneidring (12) spannende Gewindemutter (32).

10. Maschinenwerkzeug nach einem der Ansprüche 1 bis 9, **dadurch gekennzeichnet, dass** der Schneidkörper (12) Plattensitze für mindestens eine weitere Gruppe von gleich ausgebildeten Wendeplatten aufweist, deren wirksame Arbeitskanten in ihren Wechselpositionen auf Nennmaß beschliffen sind.

11. Schneidring für ein Maschinenwerkzeug mit mindestens zwei in Umfangsrichtung einen Abstand voneinander aufweisenden Plattensitzen (16,44) und mindestens einer Gruppe von mindestens zwei in den Plattensitzen lösbar angeordneten, gleich ausgebildeten Einsatzplatten, die jeweils mindestens eine Arbeitskante aufweisen, wobei die Arbeitskanten der Einsatzplatten einer Gruppe auf dasselbe Nennmaß beschliffen sind, wobei die Einsatzplatten als Wendeplatten (18,42) ausgebildet sind, wobei jede einzelne Wendeplatte (18,42) einer Gruppe in allen Wechselpositionen einem definierten Plattensitz (16,44) zugeordnet ist, und wobei die Wendeplatten (18,42) einer Gruppe jeweils mindestens zwei Arbeitskanten (1 bis 4, 1' bis 4') aufweisen, von denen je nach Lage der Wendeplatten in den zugehörigen Plattensitzen (16,44) immer eine sich in einer wirksamen und mindestens eine andere in einer unwirksamen Position befinden, **dadurch gekennzeichnet, dass** die Wendeplatten (18,42) einer Gruppe und die Plattensitze (16,44) hinsichtlich ihrer gegenseitigen Zuordnung übereinstimmend **gekennzeichnet** sind, dass die Arbeitskanten (1 bis 4, 1' bis 4') der Wendeplatten (18,42) einer Gruppe hinsichtlich ihrer gegenseitigen Zuordnung übereinstimmend **gekennzeichnet** sind, dass alle Wendeplatten einer mehrere Wendeplatten aufweisenden Gruppe miteinander übereinstimmende Wechselpositionen einnehmen, in welchen definierte Arbeitskanten (1 bis 4, 1' bis 4') einer jeden Wendeplatte (18,42) der jeweiligen Gruppe innerhalb des zugehörigen Plattensitzes (16,44) gleich orientiert sind, und dass die Arbeitskanten der Wendeplatten einer Gruppe in allen gemeinsamen Wechselpositionen auf Nennmaß beschliffen sind.

12. Schneidring nach Anspruch 11, **dadurch gekennzeichnet, dass** die Wendeplatten (18) einer Gruppe als Schneidplatten und deren Arbeitskanten (1 bis 4) als Schneidkanten ausgebildet sind.

13. Schneidring nach Anspruch 11 oder 12, **dadurch gekennzeichnet, dass** die Wendeplatten (42) einer Gruppe als Stützplatten und die Arbeitskanten (1' bis 4') als Stützkanten ausgebildet sind.

14. Schneidring nach einem der Ansprüche 11 bis 13, **dadurch gekennzeichnet, dass** die Wendeplatten (18,42) im Wesentlichen die Gestalt eines geraden Prismas aufweisen, an dessen zu einer Grundfläche senkrechten Seitenkanten die Arbeitskanten (1 bis 4, 1' bis 4') eingeformt sind.

15. Schneidring nach einem der Ansprüche 11 bis 14, **dadurch gekennzeichnet, dass** Plattensitze für mindestens eine weitere Gruppe von gleich ausgebildeten Wendeplatten, deren Arbeitskanten in ihren wirksamen Wechselpositionen auf Nennmaß beschliffen sind, vorgesehen sind.

## Claims

1. A machine tool for use in tool machines, comprising a cutting body (12), which is preferably realized as a cutting ring, at least two plate seats (16, 44) at a distance from one another in the circumferential direction in the cutting body, at least one group of at least one insert plate (18, 42) that is detachably arranged in the plate seats and that has at least one working edge (1 to 4), the at least one working edge of the at least one insert plate of a group being ground to a predefined nominal size, the insert plates being realized as reversible plates (18, 42), each individual reversible plate of a group being assigned to a defined plate seat (16, 44) in all positions of change, and the reversible plates of a group each having at least two working edges (1 to 4, 1' to 4'), of which, depending on the position of the reversible plates in the associated plate seats (16, 44), in each case one is in an operative position and at least one other is in a non-operative position, **characterized in that** the reversible plates (18, 42) of a group and the plate seats (16, 44) are identified correspondingly in respect of their mutual assignment, the working edges (1 to 4, 1' to 4') of the reversible plates (18, 42) of a group are identified correspondingly in respect of their mutual assignment, all reversible plates of a group having a plurality of reversible plates assume mutually corresponding positions of change, in which defined working edges (1 to 4, 1' to 4') of each reversible plate (18, 42) of the respective group have the same orientation within the associated plate seat (16, 44), and the working edges (1 to 4, 1' to 4') of the reversible plates of a group are ground to nominal size in all common positions of change.

2. The machine tool as claimed in claim 1, **characterized in that** the reversible plates (18) of a group are realized as cutting plates, and their working edges (1 to 4) are realized as cutting edges.

3. The machine tool as claimed in claim 1 or 2, **characterized in that** the reversible plates (42) of a group are realized as support plates, and the working edges (1' to 4') are realized as support edges.

4. The machine tool as claimed in any one of claims 1 to 3, **characterized in that** the cutting body is realized as a cutting ring (12) having plate seats (16, 44) arranged in a distributed manner over its circumference.

5. The machine tool as claimed in any one of claims 1 to 4, **characterized in that** the reversible plates (18, 42) have, in essence, the form of a straight prism, on whose lateral edges, which are perpendicular to a basic surface, the working edges (1 to 4, 1' to 4') are formed-in.

6. The machine tool as claimed in claim 5, **characterized in that** the reversible plates (18, 42) have the form of a prism having a rectangular or square basic surface and that the mutually adjacent working edges of the reversible plates (18) are oriented such that they are laterally reversed in pairs in relation to one another.

7. The machine tool as claimed in any one of claims 1 to 6, **characterized in that** the cutting body, realized as a cutting ring (12), has a central, preferably tapered spreading device for spreading the cutting ring.

8. The machine tool as claimed in claim 7, **characterized in that** the cutting ring (12) has support elements (36) that complement one another to form an internal taper and that are assigned to the individual plate seats (16, 44), and between which there are arranged elastically spreadable wall portions (40) of lesser wall thickness that extend in the circumferential direction and that are assigned to individual chip grooves (38), and there is provided a spreading body (28), which clamps the cutting ring (12) against a tool holder (10) and bears against the support elements (36) via an external taper (30).

9. The machine tool as claimed in claim 8, **characterized by** a threaded nut (32), which can be screwed onto a central threaded stem (26) that is solid with the tool holder, and which clamps the spreading body (28) against the cutting ring (12).

10. The machine tool as claimed in any one of claims 1 to 9, **characterized in that** the cutting body (12) has plate seats for at least one further group of reversible plates of like realization, whose operative working edges are ground to nominal size in their positions of change.

11. A cutting ring for a machine tool, comprising at least two plate seats (16, 44) at a distance from one another in the circumferential direction, and at least one group of at least two insert plates of like realization that are detachably arranged in the plate seats and that each have at least one working edge, the working edges of the insert plates of a group being ground to the same nominal size, the insert plates being realized as reversible plates (18, 42), each individual reversible plate (18, 42) of a group being assigned to a defined plate seat (16, 44) in all positions of change, and the reversible plates (18, 42) of a group each having at least two working edges (1 to 4, 1' to 4'), of which, depending on the position of the reversible plates in the associated plate seats (16, 44), in each case one is in an operative position and at least one other is in a non-operative position, **characterized in that** the reversible plates (18, 42) of a group and the plate seats (16, 44) are identified correspondingly in respect of their mutual assignment, the working edges (1 to 4, 1' to 4') of the reversible plates (18, 42) of a group are identified correspondingly in respect of their mutual assignment, all reversible plates of a group having a plurality of reversible plates assume mutually corresponding positions of change, in which defined working edges (1 to 4, 1' to 4') of each reversible plate (18, 42) of the respective group have the same orientation within the associated plate seat (16, 44), and the working edges of the reversible plates of a group are ground to nominal size in all common positions of change.

12. The cutting ring as claimed in claim 11, **characterized in that** the reversible plates (18) of a group are realized as cutting plates, and their working edges (1 to 4) are realized as cutting edges.

13. The cutting ring as claimed in either of claims 11 or 12, **characterized in that** the reversible plates (42) of a group are realized as support plates, and the working edges (1' to 4') are realized as support edges.

14. The cutting ring as claimed in any one of claims 11 to 13, **characterized in that** the reversible plates (18, 42) have, in essence, the form of a straight prism, on whose lateral edges, which are perpendicular to a basic surface, the working edges (1 to 4, 1' to 4') are formed-in.

15. The cutting ring as claimed in any one of claims 11 to 14, **characterized in that** there are provided plate seats for at least one further group of reversible plates of like realization, whose working edges are ground to nominal size in their operative positions of change.

## Revendications

1. Outil d'usinage à utiliser dans des machines-outils, avec un corps de coupe (12) réalisé de préférence sous forme de bague coupante, avec au moins deux sièges de plaquette (16, 44) mutuellement distants en direction circonférentielle dans le corps de coupe, avec au moins un groupe d'au moins une plaquette d'insertion (18, 42) qui est disposée de manière amovible dans les sièges de plaquette et qui présente au moins une arête de travail (1 à 4), sachant que l'arête de travail au moins unique de la plaquette d'insertion au moins unique d'un groupe est meulée à une cote nominale prédéfinie, sachant que les plaquettes d'insertion sont réalisées sous forme de plaquettes réversibles (18, 42), sachant que chaque plaquette réversible individuelle d'un groupe est associée dans toutes les positions de remplacement à un siège de plaquette défini (16, 44), et sachant que les plaquettes réversibles d'un groupe présentent chacune au moins deux arêtes de travail (1 à 4, 1' à 4'), parmi lesquelles, en fonction de la position des plaquettes réversibles dans les sièges de plaquette associés (16, 44), l'une se trouve toujours dans une position active et au moins une autre dans une position inactive, **caractérisé en ce que** les plaquettes réversibles (18, 42) d'un groupe et les sièges de plaquette (16, 44) sont identifiés de façon correspondante quant à leur association mutuelle, **en ce que** les arêtes de travail (1 à 4, 1 ' à 4') des plaquettes réversibles (18, 42) d'un groupe sont identifiées de façon correspondante quant à leur association mutuelle, **en ce que** toutes les plaquettes réversibles d'un groupe présentant plusieurs plaquettes réversibles prennent des positions de remplacement mutuellement correspondantes, dans lesquelles des arêtes de travail définies (1 à 4, 1' à 4') de chaque plaquette réversible (18, 42) du groupe respectif sont identiquement orientées à l'intérieur du siège de plaquette associé (16, 44), et **en ce que** les arêtes de travail (1 à 4, 1' à 4') des plaquettes réversibles d'un groupe sont meulées à la cote nominale dans toutes les positions de remplacement communes.

2. Outil d'usinage selon la revendication 1, **caractérisé en ce que** les plaquettes réversibles (18) d'un groupe sont conçues comme plaquettes de coupe et leurs arêtes de travail (1 à 4) comme arêtes de coupe.

3. Outil d'usinage selon la revendication 1 ou 2, **caractérisé en ce que** les plaquettes réversibles (42) d'un groupe sont conçues comme plaquettes de soutien et les arêtes de travail (1' à 4') comme arêtes de soutien.

4. Outil d'usinage selon l'une des revendications 1 à 3, **caractérisé en ce que** le corps de coupe est réalisé sous forme de bague coupante (12) avec des sièges de plaquette (16, 44) disposés en étant répartis sur sa circonférence.

5. Outil d'usinage selon l'une des revendications 1 à 4, **caractérisé en ce que** les plaquettes réversibles (18, 42) présentent essentiellement la forme d'un prisme droit, les arêtes de travail (1 à 4, 1' à 4') étant formées sur les arêtes latérales du prisme perpendiculaires à une base du prisme.

6. Outil d'usinage selon la revendication 5, **caractérisé en ce que** les plaquettes réversibles (18, 42) présentent la forme d'un prisme à base rectangulaire ou carrée, et **en ce que** les arêtes de travail mutuellement voisines des plaquettes réversibles (18) sont orientées en symétrie réciproque par paires.

7. Outil d'usinage selon l'une des revendications 1 à 6, **caractérisé en ce que** le corps de coupe réalisé sous forme de bague coupante (12) présente un dispositif écarteur central, de préférence de forme conique, pour ouvrir par écartement la bague coupante.

8. Outil d'usinage selon la revendication 7, **caractérisé en ce que** la bague coupante (12) présente des éléments de soutien (36) qui sont associés aux sièges de plaquette individuels (16, 44) et qui se complètent pour former un cône intérieur, éléments entre lesquels sont disposés des parties de paroi (40) de moindre épaisseur de paroi, élastiquement écartables, s'étendant en direction circonférentielle et associées à des rainures à copeaux individuelles (38), et **en ce qu'**il est prévu un corps écarteur (28), s'appliquant par un cône extérieur (30) contre les éléments de soutien (36) et serrant la bague coupante (12) contre un porte-outil (10).

9. Outil d'usinage selon la revendication 8, **caractérisé par** un écrou fileté (32) qui peut être vissé sur un tourillon fileté central (26) solidaire du porte-outil et qui serre le corps écarteur (28) contre la bague coupante (12).

10. Outil d'usinage selon l'une des revendications 1 à 9, **caractérisé en ce que** le corps de coupe (12) présente des sièges de plaquette pour au moins un autre groupe de plaquettes réversibles de configuration identique, dont les arêtes de travail actives sont meulées à la cote nominale dans leurs positions de remplacement.

11. Bague coupante pour un outil d'usinage avec au moins deux sièges de plaquette (16, 44) mutuellement distants en direction circonférentielle et avec au moins un groupe d'au moins deux plaquettes d'insertion de configuration identique qui sont disposées de manière amovible dans les sièges de plaquette et qui présentent chacune au moins une arête de travail, sachant que les arêtes de travail des plaquettes d'insertion d'un groupe sont meulées à la même cote nominale, sachant que les plaquettes d'insertion sont réalisées sous forme de plaquettes réversibles (18, 42), sachant que chaque plaquette réversible individuelle (18, 42) d'un groupe est associée dans toutes les positions de remplacement à un siège de plaquette défini (16, 44), et sachant que les plaquettes réversibles (18, 42) d'un groupe présentent chacune au moins deux arêtes de travail (1 à 4, 1' à 4'), parmi lesquelles, en fonction de la position des plaquettes réversibles dans les sièges de plaquette associés (16, 44), l'une se trouve toujours dans une position active et au moins une autre dans une position inactive, **caractérisée en ce que** les plaquettes réversibles (18, 42) d'un groupe et les sièges de plaquette (16, 44) sont identifiés de façon correspondante quant à leur association mutuelle, **en ce que** les arêtes de travail (1 à 4, 1' à 4') des plaquettes réversibles (18, 42) d'un groupe sont identifiées de façon correspondante quant à leur association mutuelle, **en ce que** toutes les plaquettes réversibles d'un groupe présentant plusieurs plaquettes réversibles prennent des positions de remplacement mutuellement correspondantes, dans lesquelles des arêtes de travail définies (1 à 4, 1' à 4') de chaque plaquette réversible (18, 42) du groupe respectif sont identiquement orientées à l'intérieur du siège de plaquette associé (16, 44), et **en ce que** les arêtes de travail des plaquettes réversibles d'un groupe sont meulées à la cote nominale dans toutes les positions de remplacement communes.

12. Bague coupante selon la revendication 11, **caractérisée en ce que** les plaquettes réversibles (18) d'un groupe sont conçues comme plaquettes de coupe et leurs arêtes de travail (1 à 4) comme arêtes de coupe.

13. Bague coupante selon la revendication 11 ou 12, **caractérisée en ce que** les plaquettes réversibles (42) d'un groupe sont conçues comme plaquettes de soutien et les arêtes de travail (1' à 4') comme arêtes de soutien.

14. Bague coupante selon l'une des revendications 11 à 13, **caractérisée en ce que** les plaquettes réversibles (18, 42) présentent essentiellement la forme d'un prisme droit, les arêtes de travail (1 à 4, 1' à 4') étant formées sur les arêtes latérales du prisme perpendiculaires à une base du prisme.

15. Bague coupante selon l'une des revendications 11 à 14, **caractérisée en ce qu'**il est prévu des sièges de plaquette pour au moins un autre groupe de plaquettes réversibles de configuration identique, dont les arêtes de travail sont meulées à la cote nominale dans leurs positions de remplacement actives.
